**Europäisches Patentamt**

**European Patent Office**

**Office européen des brevets**

(11) Veröffentlichungsnummer: **0 107 741**
**B1**

(12) **EUROPÄISCHE PATENTSCHRIFT**

(45) Veröffentlichungstag der Patentschrift:
23.09.87

(21) Anmeldenummer: **82110001.3**

(22) Anmeldetag: **29.10.82**

(51) Int. Cl.⁴: **A 23 G 3/02**

(54) **Schneidvorrichtung für kontinuierlich laufende Materialstränge aus formbaren Massen, insbesondere aus formbarer Süsswarenmasse.**

(43) Veröffentlichungstag der Anmeldung:
**09.05.84 Patentblatt 84/19**

(45) Bekanntmachung des Hinweises auf die Patenterteilung:
**23.09.87 Patentblatt 87/39**

(84) Benannte Vertragsstaaten:
**DE GB IT NL**

(56) Entgegenhaltungen:
**FR-A-815 192**
**GB-A-392 996**
**GB-A-576 923**
**GB-A-605 752**
**US-A-2 576 533**
**US-A-2 620 753**

(73) Patentinhaber: **Sollich, Helmut, D-4902 Bad Salzuflen (DE)**

(72) Erfinder: **Sollich, Helmut, D-4902 Bad Salzuflen (DE)**

(74) Vertreter: **Patentanwälte Dipl.- Ing. Rudolf Bibrach Dipl.- Ing. Elmar Rehberg, Pütterweg 6 Postfach 738, D-3400 Göttingen (DE)**

## Beschreibung

Die Erfindung betrifft eine Schneidvorrichtung für kontinuierlich laufende Materialstränge aus formbaren Massen, insbesondere formbarer Süßwarenmasse unter Verwendung eines auf- und ablaufenden Hackmessers und einer damit zusammenarbeitenden Schneidunterlage. Üblicherweise werden solche Schneidvorrichtungen benötigt, um die Massestränge in einzelne portionsgroße Stücke zu unterteilen, die dann der weiteren Verarbeitung zugeführt werden. Die dabei zur Verwendung kommenden Massen, wie Hartzuckermasse, Karamel, Schokolade, Creme, Nugat, Krokant oder auch Massen, wie sie heute vielfach verbraucht werden als sog. Müsli- oder Frühstücksriegel, die aus fett- oder zuckergebundenen Mischungen wie Cerealien, Früchten oder Nüssen hergestellt werden, sind wegen ihrer Konsistenz schwer zu unterteilen. Sie haften sowohl am Messer als auch an der Schneidunterlage. Deshalb ist es schwierig, Hackmesser und Schneidunterlage während des Betriebes immer sauber zu halten.

Als Schneidvorrichtung sind auf- und abbewegte Hackmesser und ein damit zusammenarbeitender, eine Schneidunterlage bildender Schneidbalken bekannt, der entsprechend der Strangbewegung während des Schneidvorganges mitbewegt und wieder zurückgeführt werden muß. Der dafür erforderliche Antrieb und der Ausgleich der dabei auftretenden Massekräfte verursachen einen erheblichen Bauaufwand und die Arbeitsgeschwindigkeit wird beeinträchtigt. Die Oberfläche der Schneidunterlage muß verhältnismäßig weich sein und besteht vorzugsweise aus Holz oder Kunststoff, damit das Hackmesser beim Schneidvorgang geringfügig in die Oberfläche eindringen kann, was aber zu deren vorzeitigen Verschleiß führt.

Die US-A-2 576 533 zeigt ein Hackmesser, bei welchem als Schneidunterlage ein Förderband dient, welches über eine unter dem Messer geordnete Stützrolle hinweggeführt ist. Das Förderband ist üblicherweise elastisch, so daß das Messer beim Schneiden geringfügig in die Oberfläche des Bandes eindringt bzw. sie elastisch verformt. Es besteht hier die Gefahr von Verunreinigungen sowie ein vorzeitiger Verschleiß der Schneidunterlage. Ähnliches gilt für die GB-A-576 923. Auch hier ist die Schneidunterlage ein Förderband, wobei zusätzlich die darunter angeordnete Walze aus elastischem Material, vorzugsweise weichem Gummi, bestehen soll. In beiden Fällen wird die Verwendung einer weichen Schneidunterlage als notwendig erachtet, damit das Schneidgut, welches meistens weich und klebrig ist, vollständig zertrennt werden kann, ohne das dabei sogenannte Schwänze gebildet werden, die einerseits zur Verschmutzung der Maschine beitragen und andererseits die Weiterverarbeitung schweren.

Die US-A.2 620 753 zeigt eine Einrichtung mit einem mit dem Schneidgut mitbewegten Hackmesser. Eine Schneidunterlage ist hier jedoch nicht vorgesehen. Stattdessen ist hier ein Untermesser angeordnet, welches mit dem Hackmesser scherenartig zusammenarbeitet. Die Einstellung einer solchen Schneideinrichtung ist außerordentlich schwierig, da das bewegte Hackmesser das feststehende Untermesser punktgenau im Bereich der Schneidkante treffen muß.

Aufgabe der Erfindung ist es, die geschilderten Mängel zu beheben und mit geringem Bauaufwand eine Schneidvorrichtung zu schaffen, bei der eine Verunreinigung von Messer und Schneidunterlage und deren vorzeitiger Verschleiß sowie Massenkräfte, die die Arbeitsleistung der Maschine beeinträchtigen, vermieden sind.

Dies wird erfindungsgemäß dadurch erreicht, daß die Schneidunterlage aus einer in Förderrichtung des Schneidguts umlaufenden Walze aus hartem Material, vorzugsweise geschliffenem Stahl, gebildet ist und das Hackmesser in der Ebene des Schneidguts mit entsprechend angepaßter Geschwindigkeit hin- und herläuft, wobei der tiefste Vorrückpunkt auf dem Walzenumfang liegt.

Mit besonderem Vorteil sind auf dem Walzenumfang und ggf. zu beiden Seiten des Messers Abstreifer für etwa anhängende Masse vorgesehen.

Erfindungsgemäß arbeitet das auf- und abgehende Hackmesser in der Achsebene der die Schneidunterlage bildenden Walze. Das zu unterteilende Schneidgut kann durch einstellbare Niederhalter gesichert werden. Walze und Abstreifer können heiz- oder kühlbar sein, je nach der Massezusammensetzung der zu unterteilenden Stränge. Vor und hinter der Schneidstelle sind Förderbänder für die zulaufenden Stränge und die davon abgetrennten Materialstücke vorgesehen und in ihrer Fördergeschwindigkeit einstellbar.

Eine Ausführungsform der Erfindung ist in der anliegenden Zeichnung wiedergegeben, und zwar stellt diese einen Längsschnitt durch den die Erfindung verkörpernden Teil einer Schneidvorrichtung dar.

Auf einem Maschinengestell 1 sitzt in Lagerböcken 2 eine Laufschiene 3, auf welcher sich quer verschiebbar ein Träger 4 für das Hackmesser 5 der Schneidvorrichtung führt. Durch im einzelnen nicht weiter gezeigte Leitstücke 6 bzw. 6' ist eine tischflächenähnliche Führung gebildet, die unterhalb des Hackmessers 5 eine Lücke 7 freiläßt. In dieser lagert in dem Maschinengestell 1 auf einer Antriebswelle 8 eine Walze 9, vorzugsweise aus gehärtetem Stahl oder anderem harten Material, die die Schneidunterlage bildet und dabei weitgehend den Freiraum der Lücke 7 zwischen den Leitstücken 6 und 6' ausfüllt. Durch einen nicht dargestellten Antrieb wird die Walze 9 in der eingezeichneten Pfeilrichtung mit der Zulaufgeschwindigkeit des zu zerteilenden Massestranges angetrieben.

Über das Leitstück 6 läuft ein Zubringeband 16 in der eingezeichneten Pfeilrichtung und über das Leitstück 6' ein Abführband 16'. Auf dem Band 16 läuft der zu unterteilende Massestrang 10 zur Schneidstelle, während die vom Strang abgeteilten Einzelstücke 11 von dem Band 16', welches vorzugsweise mit etwas größerer Geschwindigkeit als das Band 16 läuft, weggefördert werden, wobei sich infolge der Geschwindigkeitsdifferenz zwischen den einzelnen Stücken entsprechend große Lücken bilden.

Auf dem Umfang der die Schneidunterlage bildenden Walze 9 liegt ein Abstreifmesser 12 an, welches von einer Haltevorrichtung 13, 14 einstellbar gehalten ist. Das Abstreifmesser 12 hält den Walzenumfang 9 glatt und sauber.

Das Hackmesser 5 sitzt auswechselbar in einem mehrteiligen Messerhalter 15, der in einem auf- und abfahrbaren Schlitten 17 gehalten ist. Der Antrieb für das auf- und abbewegte Hackmesser 5 ist nicht mit dargestellt. Gleichzeitig mit der Auf- und Abbewegung des Hackmessers 5 erfolgt eine Hin- und Herbewegung des Hackmesserträgers 4. Dessen Antrieb ist der besseren Übersicht halber ebenfalls nicht mit dargestellt. Auf jeden Fall sind die Antriebe so ausgestattet und eingestellt, daß die Schneidkante des Hackmessers 5 sich beim Schneidvorgang in der strichpunktiert eingezeichneten Messerbahn MB bewegt, wobei die Horizontalgeschwindigkeit der Walze 9 übereinstimmt.

Zu beiden Seiten des Hackmessers 5 sitzen in Haltern 18 bzw. 18' einstellbare, an den Seitenflächen des Messers 5 anliegende, Abstreifer 19 bzw. 19', die die Aufgabe haben, das Messer 5 beiderseitig sauberzuhalten.

Unterhalb der Abstreiferhalter 18, 18' können noch einstellbare Niederhalter 20 bzw. 20' vorgesehen sein zur Führung des Schneidgutes bzw. sollen die Niederhalter das ungewollte Abheben des Stranges bzw. der abgetrennten Strangteile von dem jeweiligen Förderband 16 bzw. 16' verhüten.

Selbstverständlich sind die verschiedenen Antriebsaggregate für die Walze 9 und das Hackmesser 5 in verschiedenster Weise einstellbar und in ihrer Arbeitsgeschwindigkeit regelbar, um die Schneidvorrichtung genauestens dem zu schneidenden Gut anzupassen. Dabei kann auch die Größe der abzuteilenden Strangteile eingestellt werden. Ebenso ist es möglich, Einzelstränge zu zerteilen oder auch gleichzeitig mehrere nebeneinanderliegende bzw. parallellaufende Materialstränge mit der Schneidvorrichtung bzw. mit einem Hackmesser 5 zu zerteilen.

Schließlich läßt sich die Walze 9 mit den daran sitzenden Abstreifern und die Abstreifer für das Hackmesser 5 je nach den Anforderungen des Schneidgutes erwärmen oder abkühlen.

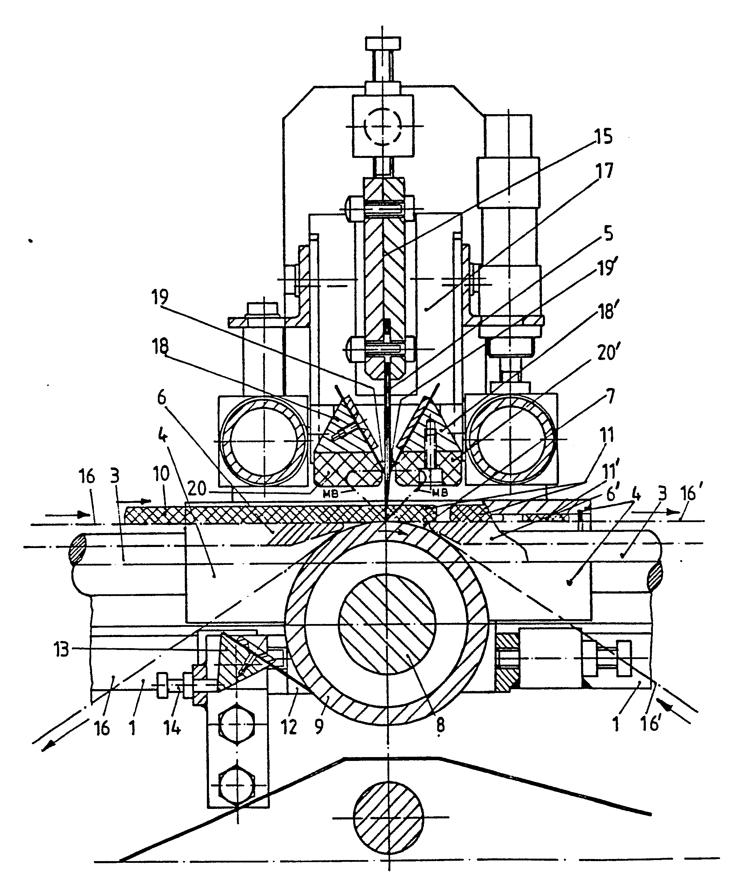

## Patentansprüche

1. Schneidvorrichtung für kontinuierlich laufende Materialstränge aus formbaren Massen, insbesondere Süßwarenmassen, mit einem auf- und abbewegten Hackmesser und mit einer Schneidunterlage, dadurch gekennzeichnet, daß die Schneidunterlage aus einer in Förderrichtung des Schneidguts (10) umlaufenden Walze (9) aus hartem Material, vorzugsweise geschliffenem Stahl, gebildet ist und das Hackmesser (5) in der Ebene des Schneidguts (10) mit entsprechend angepaßter Geschwindigkeit hin- und herläuft, wobei der tiefste Vorrückpunkt auf dem Walzenumfang liegt.

2. Schneidvorrichtung nach Anspruch 1, gekennzeichnet durch die Anordnung von auf dem Walzenumfang (9) aufliegenden Abstreifern 12.

3. Schneidvorrichtung nach Anspruch 1 bis 2, dadurch gekennzeichnet, daß beiderseits des Hackmessers (5) auf die Produkthöhe einstellbare Niederhalter (20, 20') für das Schneidgut (10) und Abstreifer (19, 19') für das Hackmesser (5) vorgesehen sind.

4. Schneidvorrichtung nach Anspruch 1 bis 3, dadurch gekennzeichnet, daß die Walze (9) und die Abstreifer (12) heiz- oder kühlbar sind.

5. Schneidvorrichtung nach Anspruch 1 bis 4, dadurch gekennzeichnet, daß vor und hinter der Schneidstelle (7) Förderbänder (16, 16') für das Schneidgut (10) bzw. die davon abgetrennten Materialstücke (11) vorgesehen und in ihrer Fördergeschwindigkeit einstellbar sind.

## Claims

1. Cutting device for continuously running material strands of mouldable masses, in particular confectionary masses, with a chopping knife that is moved up and down and with a cutting bed, characterised thereby, that the cutting bed is formed of a roller, which is rotating in conveying direction of the stock (10) to be cut and of hard material, preferably of ground steel, and the chopping knife (5) runs to and fro at appropriately adapted speed in the plane of the stock (10) to be cut, wherein the lowest forward feed point lies on the roller circumference.

2. Cutting device according to claim 1, characterised by strippers (12) resting on the roller circumference (9).

3. Cutting device according to claim 1 to 2, characterised thereby, that holding-down members (20, 20'), which are settable to the height of the product and intended for the stock (10) to be cut, and strippers (19, 19') for the chopping knife (5) are provided at both sides of the chopping knife (5).

4. Cutting device according to claim 1 to 3, characterised thereby, that the roller (9) and the strippers (12) are heatable or coolable.

5. Cutting device according to claim 1 to 4,

**0 107 741**

characterised thereby, that conveyor belts (16, 16') for the stock (10) to be cut or for the material pieces (11) severed therefrom are provided before and behind the cutting place (7) and settable in their conveying speed.

**Revendications**

1. Dispositif de coupe pour barres de matière malléable en déplacement continu, en particulier de masses de confiserie déformables, comportant un couteau-hâchoir se déplaçant vers le haut et vers le bas, et une embase de coupe, caractérisé par le fait que l'embase de coupe est formée d'un cylindre (9) en matériau dur de préférence en acier rectifié, tournant dans le sens de transport du produit à couper, et que le couteau-hâchoir (5) va et vient dans le plan du produit à couper, le point d'avance le plus bas étant situé sur le pourtour du cylindre.

2. Dispositif de coupe selon la revendication 1, caractérisé par la mise en place de râcleurs (12) placés au dessus du pourtour du cylindre (9).

3. Dispositif de coupe selon les revendications 1 à 2, caractérisé par le fait que des deux côtés du couteauhâchoir (5), des organes (20, 20') réglables à la hauteur du produit, sont destinés à retenir vers le bas le produit à couper (10) et que les râcleurs (19, 19'), sont prévus pour le couteau-hâchoir (5).

4. Dispositif de coupe selon les revendications 1 à 3, caractérisé par le fait que le cylindre (9) et les râcleurs (12) peuvent être refroidis ou chauffés.

5. Dispositif de coupe selon les revendications 1 à 4, caractérisé par le fait que des bandes transporteuses (16, 16') sont prévues, à l'avant et à l'arrière du point de coupe (7), pour le produit à couper (10), ou respectivement pour les morceaux du produit (11) qui en sont coupés, et peuvent être réglés en ce qui concerne leur vitesse d'avancement.